Europäisches Patentamt

European Patent Office

Office européen des brevets

(11) Veröffentlichungsnummer: **0 157 336**
**A2**

(12) # EUROPÄISCHE PATENTANMELDUNG

(21) Anmeldenummer: **85103540.2**

(22) Anmeldetag: **25.03.85**

(51) Int. Cl.⁴: **B 60 T 7/20**

(30) Priorität: **29.03.84 DE 3411630**

(43) Veröffentlichungstag der Anmeldung: **09.10.85**
**Patentblatt 85/41**

(84) Benannte Vertragsstaaten: **AT CH DE FR GB IT LI NL**

(71) Anmelder: **Weinmann Nutzfahrzeuge GmbH,**
**Xaver-Münch-Strasse 2-4, D-8016 Feldkirchen (DE)**

(72) Erfinder: **Weinmann, Klaus, Birkenstrasse 6,**
**D-8021 Buchenhain (DE)**

(74) Vertreter: **Stahl, Gerhard F.W., Patentanwalt Dipl.-Ing.**
**Gerhard F.W. Stahl Hellmannstrasse 10,**
**D-8000 München 71 (DE)**

(54) **Auflaufbremse für einen Sattelanhänger.**

(57) Es wird eine Auflaufbremse für einen Sattelanhänger offenbart, der mit der Aufliegerplatte einer Zugmaschine über einen Königszapfen drehbar kuppelbar ist. Es sind Vorkehrungen getroffen, damit die von der Zugmaschine auf den Sattelanhänger ausgeübten vertikalen Abstützkräfte keine Teile der Auflaufbremse beeinflussen. Zu diesem Zweck ist vorgesehen, dass der Königszapfen an einem Gleitstück befestigt ist, das mit dem Rahmen des Sattelanhängers in Fahrtrichtung verschiebbar verbunden ist, dass der Verschiebeweg des Gleitstücks in Fahrtrichtung durch ein am Rahmen des Sattelanhängers befestigtes Widerlager begrenzt ist und dass in den Sattelanhänger ein Auflaufbremsmechanismus an sich bekannter Bauart eingebaut ist, dessen gegen die Fahrtrichtung verschiebbarer Betätigungszapfen sich an einem Anschlag des Gleitstücks federnd abstützt.

0157336

---------------------------------------------------------

Auflaufbremse für einen Sattelanhänger

---------------------------------------------------------

Die Erfindung betrifft eine Auflaufbremse für einen Sattelanhänger, der mit der Aufliegerplatte einer Zugmaschine über einen Königszapfen drehbar kuppelbar ist.

Mechanisch wirkende Auflaufbremsen werden in großem Umfang bei solchen Anhängern benutzt, die sich auf ihren eigenen Rädern abstützen, d.h. daß nur ein Bruchteil des Gewichts des Anhängers über die Kupplung auf das Zugfahrzeug übertragen wird. Der in Fahrtrichtung relativ zum Rahmen des Anhängers verschiebbar angeordnete Betätigungszapfen des Auflaufbremsmechanismus ist mit der Kupplung des Zugfahrzeuges, zumeist eine Kugelkopfkupplung, verbunden. Wenn das Zugfahrzeug seine Geschwindigkeit verringert, dann läuft der Anhänger aufgrund seiner Massenträgheit auf das Zugfahrzeug auf, mit der Folge, daß der mit der Kupplung verbundene Betätigungszapfen des Auflaufbremsmechanismus gegenüber dem Anhängerrahmen nach hinten verschoben wird und die den Rädern des Anhängers zugeordneten Bremsen betätigt werden. Dadurch wird die Geschwindigkeit des Anhängers gleichfalls verringert, so daß sich dessen Abstand gegenüber dem Zugfahrzeug wieder vergrößert und der federbelastete Betätigungszapfen des Auflaufbremsmechanismus gegenüber dem Anhängerrahmen wieder nach vorne bewegen kann. Dadurch ergibt sich ein selbstregelnder Bremsvorgang. Da die Kupplung im Abstand hinter der Hinterachse des Zugfahrzeugs angeordnet ist, bewirken die vom Anhänger auf die Kupplung ausgeübten Kräfte ein großes Drehmoment in Bezug auf den Schwerpunkt des Zugfahrzeugs. Wenn das Zugfahrzeug abgebremst wird, dann übt der auflaufende Anhänger auf die Kupplung eine nach unten gerichtete Kraftkomponente aus, wodurch die Vorderräder des Zugfahrzeugs entlastet werden. Dadurch wird aber die Lenkfähigkeit des Zugfahrzeugs stark beeinträchtigt, was eine erhebliche Gefahrenquelle darstellt. Das Zugfahrzeug kann deshalb beim Bremsen ins Schlingern geraten, was außermittige Auflaufkräfte des Anhängers und ein Umstürzen des Zugfahrzeugs und/oder des Anhängers zur Folge haben kann.

Hinsichtlich der beim Bremsen vom Anhänger auf das Zugfahrzeug ausgeübten Kräfte wesentlich günstiger ist ein Sattelanhänger. Da sich ein Sattelanhänger auf der zwischen den Achsen des Zugfahrzeugs angeordneten Aufliegerplatte

- 3 -

0157336

abstützt, üben die Auflaufkräfte des Anhängers nur ein kleines Drehmoment auf die Zugmaschine aus, weil diese Kräfte von dem mit dem Anhängerrahmen starr verbundenen Königszapfen auf die Aufliegerplatte der Zugmaschine übertragen werden. Ein wesentlicher Nachteil eines solchen Sattelaufliegers besteht aber darin, daß er Druckluftbremsen erfordert, die verhältnismäßig teuer sind und grundsätzlich nicht lastabhängig arbeiten, d.h. es fehlt eine selbsttätige Regelung der Bremskraft, wie sie bei einer Auflaufbremse automatisch eintritt. Druckluftbremsen sind aber nicht nur teuer, sondern sie erfordern auch einen entsprechenden Kompressor in der Zugmaschine, was mit einem entsprechenden Raumbedarf verbunden ist.

Es zeigt sich also, daß es überaus wünschenswert wäre, wenn man die Vorteile eines Sattelanhängers mit denen einer Auflaufbremse kombinieren könnte.

Der Erfindung liegt daher die Aufgabe zugrunde, eine für einen Sattelanhänger geeignete Auflaufbremse zu schaffen, der mit der Aufliegerplatte einer Zugmaschine über einen Königszapfen formschlüssig kuppelbar ist.

Erfindungsgemäß wird diese Aufgabe dadurch gelöst, daß der Königszapfen an einem Gleitstück befestigt ist, das mit dem Rahmen des Sattelanhängers in Fahrtrichtung verschiebbar verbunden ist, daß der Verschiebeweg des Gleitstücks in Fahrtrichtung durch ein am Rahmen des Sattelanhängers befestigtes Widerlager begrenzt ist und daß in den Sattelanhänger ein Auflaufbremsmechanismus an sich bekannter Bauart eingebaut ist, dessen gegen die Fahrtrichtung verschiebbarer Betätigungszapfen sich an einem Anschlag des Gleitstücks federnd abstützt.

- 4 -

0157336

Beim normalen Fahrbetrieb wird die Zugkraft der Zugmaschine über den mit der Aufliegerplatte formschlüssig gekuppelten Königszapfen auf das Gleitstück übertragen und von diesem über das am Rahmen des Sattelanhängers befestigte Widerlager in den Sattelanhänger eingeleitet. Die Aufliegerplatte der Zugmaschine nimmt dabei ungefähr 50 Prozent des Gewichtes des Sattelanhängers auf. Wenn die Zugmaschine abgebremst wird, dann versucht der Anhänger infolge der Massenträgheit seine Geschwindigkeit beizubehalten, mit der Folge, daß sich der Rahmen des Sattelanhängers gegenüber dem mit der Aufliegerplatte der Zugmaschine gekuppelten Gleitstück in Fahrtrichtung nach vorne bewegt. Das hat zur Folge, daß sich der an dem Anschlag des Gleitstücks federnd abstützende Betätigungszapfen des Auflaufbremsmechanismus relativ zum Sattelanhänger nach hinten bewegt, wodurch in an sich bekannter Weise die den Rädern des Sattelanhängers zugeordneten Bremsen betätigt werden. Dadurch wird die Geschwindigkeit des Sattelanhängers verringert, und es tritt der für Auflaufbremsen typische Selbstregelungseffekt ein. Da die Auflaufbremse mechanisch arbeitet, ist es nicht erforderlich, die Zugmaschine mit einem Druckluftkompressor auszurüsten. Die Erfindung ermöglicht es daher, herkömmliche Personenkraftwagen mit verhältnismäßig geringen Kosten in eine Zugmaschine für einen Sattelanhänger, beispielsweise einen Wohnwagen oder einen Bootstransporter, umzuwandeln. Während die herkömmlichen Anhänger für Personenkraftwagen, die mit einer Kugelkopfkupplung ausgerüstet sind, in den seltensten Fällen ein Gewicht von 2000 kg übersteigen dürfen, kann dieses Gewicht bei einem mit der erfindungsgemäßen Auflaufbremse ausgerüsteten Sattelanhänger um ein Vielfaches überstiegen werden, weil der Auflaufbremsmechanismus bzw. dessen Betätigungszapfen nur Axialkräfte, aber keine Querkräfte übertragen muß.

0157336

Das Gleitstück der Auflaufbremse ist vorzugsweise als Gleitplatte ausgebildet, die auf einer mit dem Rahmen des Sattelanhängers fest verbundenen Längsführung verschiebbar gelagert ist. Diese Längsführung besteht vorzugsweise aus zwei in Fahrtrichtung parallel angeordneten Rohren, deren vordere und hintere Enden an zwei Querträgern des Rahmens des Sattelanhängers befestigt sind, wobei der vordere Querträger das den Verschiebeweg der Gleitplatte in Fahrtrichtung begrenzende Widerlager bildet.

Um die Reibung zwischen dem Gleitstück und der Längsführung möglichst gering zu halten, ist vorgesehen, daß sich die beiden Rohre über Rollenlager auf der Gleitplatte abstützen. Die Erzielung einer höchst geringen Reibung ist deshalb wichtig, weil andernfalls die Berechnung des Auflaufbremsmechanismus erschwert wird.

Aus statischen Gründen ist es vorteilhaft, wenn die Rollenlager an den die Längsführung bildenden beiden Rohren befestigt sind. Bei einer besonders vorteilhaften Ausführungsform der Erfindung ist vorgesehen, daß die Rollenlager an den voneinander abgekehrten Seiten der Rohre befestigt sind und daß die Gleitplatte zwei der Außenseite der Rollen gegenüberliegende Führungsflansche aufweist, welche die Oberseite der Rollen übergreifen. Dadurch wird eine zwangsweise Führung des Sattelauflegerrahmens in Querrichtung und in vertikaler Richtung gegenüber der mit der Aufliegerplatte gekuppelten Gleitplatte erzielt.

In der Zeichnung sind zwei Ausführungsbeispiele der Erfindung dargestellt, die im folgenden näher erläutert werden. Es zeigt:

Fig. 1    eine schematische Seitenansicht eines mit einer Zugmaschine gekuppelten Sattelanhängers, und

0157336

Fig. 2 eine perspektivische Explosionsdarstellung der wesentlichen Teile einer Ausführungsform einer Auflaufbremse für einen Sattelanhänger,

Fig. 3 eine schematische Aufsicht auf den vorderen Bereich des Rahmens eines Sattelanhängers einer anderen Ausführungsform, und

Fig. 4 einen Querschnitt nach der Linie IV-IV in Fig. 3.

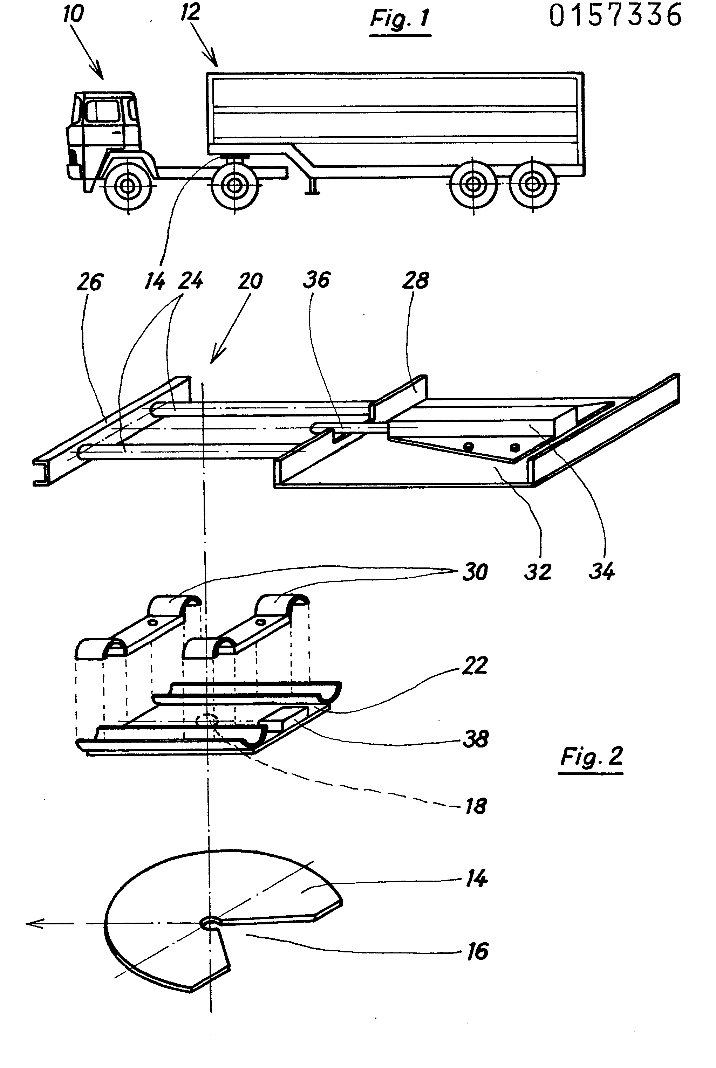

Der in Fig. 1 in der Seitenansicht schematisch dargestellte Sattelzug besteht aus einer Zugmaschine 10, mit der ein Sattelanhänger 12 gekuppelt ist. Zu diesem Zweck ist die Zugmaschine 10 mit einer Aufliegerplatte 14 versehen, die einen schwalbenschwanzförmigen Schlitz 16 aufweist, in den ein mit dem Sattelanhänger 12 verbundener Königszapfen 18 einführbar und verriegelbar ist. Da eine solche Kupplung für Sattelanhänger allgemein bekannt ist, braucht deren Ausbildung an dieser Stelle nicht näher offenbart zu werden.

Abweichend von den herkömmlichen Sattelanhängern ist der Königszapfen 18 jedoch nicht starr am Anhängerrahmen 20 befestigt. Wie dies aus Fig. 2 hervorgeht, ist der Königszapfen 18 an der Unterseite einer Gleitplatte 22 befestigt. Diese Gleitplatte 22 ist mit dem Rahmen 20 des Sattelanhängers 12 in Fahrtrichtung begrenzt verschiebbar verbunden. Zu diesem Zweck ist der Rahmen 20 des Sattelanhängers 12 mit zwei in Fahrtrichtung verlaufenden parallelen Führungsrohren 24 versehen. Die beiden Enden der zwei Rohre 24 sind am vorderen Querträger 26 bzw. an einem zusätzlich eingebauten Querträger 28 des Rahmens 20 befestigt. Die Gleitplatte 22 ist mit zwei Gegenhaltern 30 mit den Rohren 24 verschiebbar verbunden. Hinter dem zusätzlichen Querträger 28 ist eine mit den (nicht gezeigten) Längsträgern des Rahmens 20 starr verbundene Tragplatte 32 angeordnet, die einen Auflaufbremsmechanismus 34 trägt. Da es sich hierbei um einen herkömmlichen Auflaufbremsmechanismus handelt, braucht dessen Konstruktion nicht näher erläutert zu werden. Die im Handel erhältlichen Auflaufbremsen müssen allerdings zum Einsatz in dem gezeigten Sattelanhänger geringfügig abgewandelt werden, um der Tatsache Rechnung zu tragen, daß die gebremsten Räder nicht wie üblich annähernd 100 Prozent, sondern nur ungefähr 50 Prozent des Anhängergewichtes tragen, was eine entsprechend verringerte Bremskraft zur Folge hat.

Der axial verschiebbare Betätigungszapfen 36 des Auflaufmechanismus 34, der üblicherweise eine mit einer Kugelkopfkupplung in Eingriff bringbare Kugelpfanne aufweist, muß ebenfalls geringfügig abgewandelt werden, d.h. die Kugelpfanne kann entfallen. Wie dies aus Fig. 2 hervorgeht, ist die Gleitplatte 22 mit einem Anschlag 38 versehen, an dem der Betätigungszapfen 36 im eingebauten Zustand der Gleitplatte federnd anliegt.

Zum Ankuppeln des Sattelanhängers 12 fährt die Zugmaschine 10 rückwärts an diesen heran, bis der an der Gleitplatte 22 angeordnete Königszapfen 18 in den schwalbenschwanzförmigen Schlitz 16 der Aufliegerplatte 14 ordnungsgemäß eingreift, woraufhin er mit einer (nicht gezeigten) bekannten Verriegelungseinrichtung verriegelt wird. Der Sattelanhänger 12 ist jetzt über die Gleitplatte 22 mit der Zugmaschine 10 fest verbunden. Wenn die Zugmaschine jetzt losfährt, dann wird die Gleitplatte 22 auf den zwei Führungsrohren 24 nach vorne verschoben, bis sie am Querträger 26 des Rahmens 20 zur Anlage gelangt. Die Zugkräft

- 8 -

0157336

der Zugmaschine wird somit über die Gleitplatte 22 in den
Rahmen 20 eingeleitet, so daß der Sattelanhänger 12 in Gang
gesetzt wird. Wenn die Zugmaschine 10 infolge Betätigung
der zugeordneten Bremsen ihre Geschwindigkeit verringert,
dann versucht der Sattelanhänger 12 infolge der Massenträgheit seine Geschwindigkeit beizubehalten. Das hat zur Folge,
daß sich die Gleitplatte 22 auf den beiden Führungsrohren 22
vom vorderen Querträger 26 weg nach hinten bewegt, wobei der
an ihrem Anschlag 38 anliegende Betätigungszapfen 36 gegen
die Vorspannkraft der zugeordneten Feder gleichfalls nach
hinten in den Auflaufbremsmechanismus 34 hinein verschoben
wird. Diese Verschiebung des Betätigungszapfens 36 gegenüber dem Auflaufbremsmechanismus 34 hat in bekannter Weise
zur Folge, daß die den Rädern des Sattelanhängers 12 zugeordneten Bremsen über Zugseile mechanisch betätigt werden.
Dadurch wird die Geschwindigkeit des Sattelanhängers 12 verringert, so daß dessen Abstand von der Zugmaschine 10 wieder
zunimmt, d.h. die Gleitplatte 22 bewegt sich auf den Rohren
24 nach vorne zum vorderen Querträger 26 hin. Der Betätigungszapfen 36 des Auflaufbremsmechanismus 34 kann sich daher ebenfalls nach vorne bewegen, wodurch die Bremskraft abnimmt und die für Auflaufbremsen typische selbsttätige Regelung der Bremskraft eintritt. Wenn die Zugmaschine 10 wieder
beschleunigt wird, dann gelangt die Gleitplatte 22 wieder am
vorderen Querträger 26 des Rahmens 20 zur Anlage, wodurch der
Auflaufbremsmechanismus 34 wirkungslos gemacht wird.

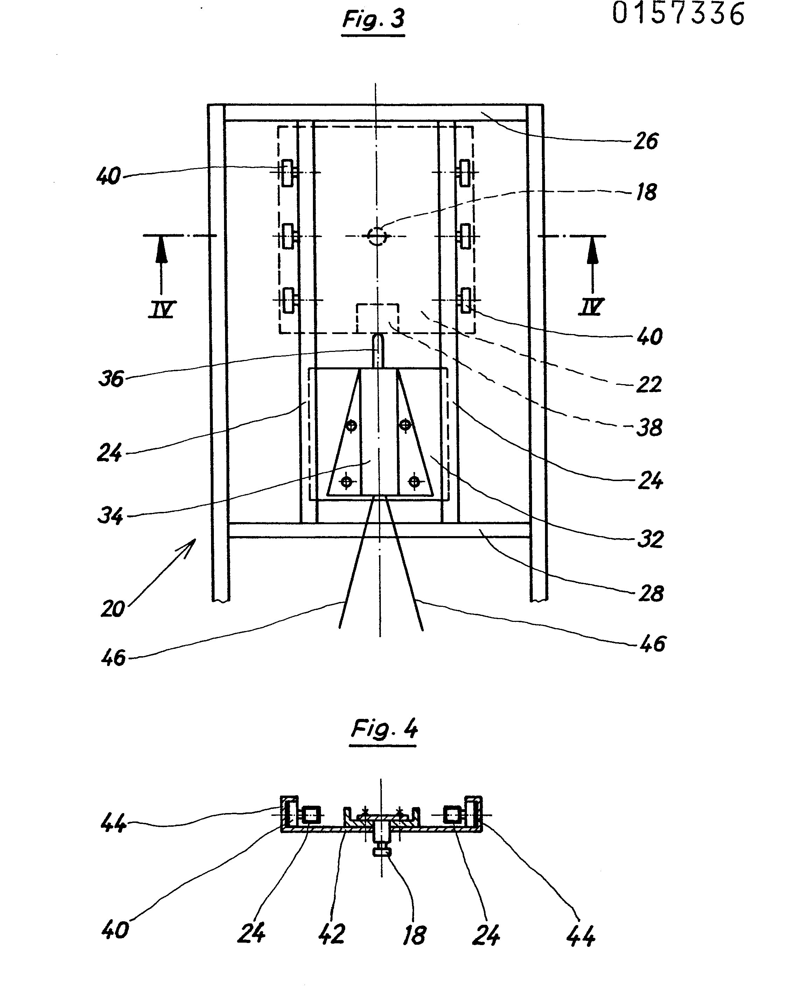

Fig. 3 zeigt eine Aufsicht auf den vorderen Endbereich
des Rahmens 20 eines Sattelanhängers, der mit einer abgewandelten Auflaufbremse versehen ist. An den voneinander abgekehrten Außenseiten der als Vierkantrohre ausgebildeten
Führungsrohre 24 sind jeweils drei Rollenlager 40 befestigt,
deren horizontale Achsen quer zur Fahrtrichtung angeordnet sind. Der Umriß der Gleitplatte 42 ist in Fig. 3 mit unterbrochenen Linien angedeutet. Wie dies aus Fig. 4 ersichtlich
ist, weist die Gleitplatte zwei der Außenseite der Rollen 40
gegenüberliegende Führungsflansche 44 auf, welche die Oberseite der Rollen übergreifen. Die Rollen 40 und damit der
Rahmen 20 des Sattelanhängers ist demzufolge durch die Gleitplatte 42 in Querrichtung und in vertikaler Richtung zwangsweise geführt. An den beiden Rohren 24 ist die Tragplatte 32
befestigt, die den Auflaufbremsmechanismus 34 trägt, dessen
Betätigungszapfen 36 am Anschlag der Gleitplatte 42 federnd
anliegt. Der Auflaufbremsmechanismus 34 ist über ein Gestänge oder Seilzüge 46 mit den Bremsen des Sattelanhängers verbunden. Der Auflaufbremsmechanismus kann aber auch hydraulisch arbeiten. In diesem Fall ist der Betätigungszapfen
mit dem Kolben eines Hydraulikzylinders gekuppelt, der über
Bremsschläuche mit den Radbremszylindern verbunden ist.

An den Führungsrohren 24 können auch mehr als drei
Rollenlager 40 befestigt sein. Es müssen aber mindestens
zwei Rollenlager sein.

Ferner können an den Führungsrohren 24 noch zwei zusätzliche Rollenlager mit vertikaler Drehachse befestigt sein,
die an den Führungsflanschen 44 der Gleitplatte 42 anliegen
und diese führen.

- 9a -

Auflaufbremse für einen Sattelanhänger

0157336

Bezugszeichenliste :

| 10 | Zugmaschine |
| 12 | Sattelanhänger |
| 14 | Aufliegerplatte |
| 16 | Schlitz in 14 |
| 18 | Königszapfen |
| 20 | Rahmen von 12 |
| 22 | Gleitplatte |
| 24 | Rohre |
| 26 | vorderer Querträger von 20 |
| 28 | zusätzlicher Querträger von 20 |
| 30 | Gegenhalter |
| 32 | Tragplatte |
| 34 | Auflaufbremsmechanismus |
| 36 | Betätigungszapfen von 34 |
| 38 | Anschlag an 22 |
| 40 | Rollenlager |
| 42 | Gleitplatte |
| 44 | Führungsflansche |
| 46 | Seilzüge von 34 |

Patentansprüche :

1. Auflaufbremse für einen Sattelanhänger, der mit der Aufliegerplatte einer Zugmaschine über einen Königszapfen drehbar kuppelbar ist, dadurch gekennzeichnet, daß der Königszapfen (18) an einem Gleitstück (22; 42) befestigt ist, das mit dem Rahmen (20) des Sattelanhängers (12) in Fahrtrichtung verschiebbar verbunden ist, daß der Verschiebeweg des Gleitstücks (22; 42) in Fahrtrichtung durch ein am Rahmen (20) des Sattelanhängers (12) befestigtes Widerlager (26) begrenzt ist und daß in den Sattelanhänger (12) ein Auflaufbremsmechanismus (34) an sich bekannter Bauart eingebaut ist, dessen gegen die Fahrtrichtung verschiebbarer Betätigungszapfen (36) sich an einem Anschlag des Gleitstücks (22; 42) federnd abstützt.

2. Auflaufbremse nach Anspruch 1, dadurch gekennzeichnet, daß das Gleitstück als Gleitplatte (22; 42) ausgebildet ist, die auf einer mit dem Rahmen (20) des Sattelanhängers (12) fest verbundenen Längsführung (24) verschiebbar gelagert ist.

3. Auflaufbremse nach Anspruch 2, dadurch gekennzeichnet, daß die Längsführung aus zwei in Fahrtrichtung parallel angeordneten Rohren (24) besteht, deren vordere und hintere Enden an zwei Querträgern (26, 28) des Rahmens (20) des Sattelanhängers (12) befestigt sind, wobei der vordere Querträger (26) das den Verschiebeweg der Gleitplatte (22; 42) in Fahrtrichtung begrenzende Widerlager bildet.

- 11 -

0157336

4. Auflaufbremse nach Anspruch 3, dadurch gekennzeichnet, daß sich die beiden Rohre (24) über Rollenlager (40)
auf der Gleitplatte (42) abstützen.

5. Auflaufbremse nach Anspruch 4, dadurch gekennzeichnet, daß die Rollenlager (40) an den beiden Rohren (24) befestigt sind.

6. Auflaufbremse nach Anspruch 5, dadurch gekennzeichnet, daß die Rollenlager (40) an den voneinander abgekehrten
Seiten der Rohre (24) befestigt sind und daß die Gleitplatte (42) zwei der Außenseite der Rollen (30) gegenüberliegende Führungsflansche (44) aufweist, welche die Oberseite der
Rollen übergreifen.

Fig. 1

0157336

Fig. 2

_Fig. 3_

_Fig. 4_